# NEUE EUROPÄISCHE PATENTSCHRIFT

(11) **EP 1 736 412 B2**
(45) Veröffentlichungstag und Bekanntmachung des Hinweises auf die Entscheidung über den Einspruch: **16.03.2016**
(45) Hinweis auf die Patenterteilung: 30.04.2008
(21) Anmeldenummer: 06008674.1
(22) Anmeldetag: 26.04.2006
(51) Int. Cl.: B65B 51/04, A22C 11/12

(54) **Clipmaschine**
Clipping machine
Machine de fermeture par clip

(30) Priorität: 23.06.2005 DE 102005029227
(43) Veröffentlichungstag der Anmeldung: 27.12.2006
(73) Patentinhaber: Poly-clip System GmbH & Co. KG, 65795 Hattersheim (DE)
(72) Erfinder: Ebert, Detlef, 61231 Bad Nauheim (DE)
(74) Vertreter: Eisenführ Speiser

(56) Entgegenhaltungen:
- DE-A1- 1 761 616
- DE-B4- 19 953 694
- DE-C1- 10 131 807
- DE-C1- 19 738 298
- DE-U1- 29 613 336
- US-A- 3 061 838
- US-A- 3 377 692
- US-A- 4 001 926

## Beschreibung

Die Erfindung betrifft eine Clipmaschine mit einem Verschließhebel, einem ersten Verschließwerkzeug, welches an dem Verschließhebel angeordnet und mit diesem schwenkbar gelagert ist, einem zweiten Verschließwerkzeug, wobei das erste Verschließwerkzeug und das zweite Verschließwerkzeug zum Verschließen von Clips relativ zueinander zwischen einer Öffnungsstellung und einer Verschlussstellung bewegbar sind, mit einer Antriebssteuerung für die Verschließwerkzeuge, die so eingerichtet ist, dass zuerst das erste Verschließwerkzeug und dann das zweite Verschließwerkzeug in die Verschlussstellung gefahren wird, und mit Einstellmitteln, eingerichtet zum Einstellen der Ruhelage des zweiten Verschließwerkzeugs und somit des Abstands der Verschließwerkzeuge, insbesondere in ihrer Verschlussstellung (Verschlussabstand).

Mit Clipmaschinen der genannten Art werden typischerweise mit flüssigem bis zähpastösem oder auch (teilweise) granularem Inhalt befüllte Beutet oder schlauchförmige Verpackungen (auch Schlauchhülle oder Darm genannt) verschlossen. Zunächst wird bei diesem Vorgang das Füllgut in die Verpackung eingebracht und im Fall einer schlauchförmigen Verpackung danach mittels Verdrängelementen in Portionen abgeteilt. Die Verdrängelemente schnüren dazu die Schlauchhülle in radialer Richtung ein und verdrängen das in dem Einschnürbereich befindliche Füllgut in axialer Richtung, bezogen auf die Schlauchachse. Im Einschnürbereich wird so ein Schlauchzopf gebildet. Auf den gebildeten Schlauchzopf werden im nächsten Arbeitstakt ein, oder im Fall einer Doppelclipanordnung zwei, Verschlusselemente (Clips) mittels der zwei (bzw. vier) gegeneinander bewegten Verschließwerkzeuge aufgebracht. Hierzu werden der erste Verschließhebel und ein zweiter Verschließhebel für das zweite Verschließwerkzeug aus ihrer Öffnungsstellung um eine in der Regel gemeinsame Schwenkachse in die Verschlussstellung geschwenkt. Die Verschließwerkzeuge umfassen paarweise jeweils einen Stempel und eine Matrize zwischen welchen der Clip bis zum Erreichen der Verschlussstellung (Umkehrpunkt der Bewegung) umgeformt wird. Nach dem Verschließen werden die Verschließwerkzeuge in ihrer Ausgangs- oder Öffnungsstellung zurückbewegt, indem die Verschließhebel aus ihrer Verschlussstellung in die Öffnungsstellung zurück geschwenkt werden.

Solche Clipmaschinen weisen meist einen Kurbelantrieb oder einen Kurvenantrieb für die Bewegung der Verschließhebel auf, bei dem mittels einer Kurvenrolle eine Steuerkurve auf einer Kurvenscheibe abgegriffen wird. Zur Übertragung der Bewegung auf die Verschließhebel kommen beispielsweise ein einfacher Hebel oder eine Kniehebelanordnung zum Einsatz, die in der Öffnungsstellung gebeugt und in der Verschlussstellung gestreckt ist.

Bei den eingangs beschriebenen Clipmaschinen kommen typischerweise Clips zum Einsatz, die aus einem geprägten Aluminiumdrahtstrang gefertigt jeweils noch an ihren Schenkelenden einstückig zusammenhängend so miteinander verbunden sind, dass sie eine gemeinsame Ebene, die Klammerebene, aufspannen. Auf diese Weise werden sie den Verschließwerkzeugen zugeführt. Dies geschieht bekanntermaßen entlang einer an dem (unteren) Verschließhebel für das erste Verschließwerkzeug vorgesehenen Führungsbahn, die im Bereich der Schwenkachse des Verschließhebels beginnt und in den Bereich des zugeordneten Verschließwerkzeugs mündet.

Der vorderste Clip wird beim Transport des Clipstrangs dem ersten (unteren) Verschließwerkzeug bekanntermaßen von einem intermittierend eingreifenden Vorschubmittel zugeführt. Solange der vorderste Clip noch mit dem nachfolgenden Clipstrang verbunden ist, wird er von diesem stabil in dem unteren Verschließwerkzeug, welches typischerweise von einer Matrize gebildet wird, gehalten.

Die Schwenkbewegung der Verschließhebel werden mittels der Antriebssteuerung - beispielsweise in Form versetzter Kurven auf einer Kurvenscheibe und/oder über eine elektronische Zeitsteuerung - zeitversetzt ausgeführt. Zunächst wird der untere Verschließhebel in seine (obere) Verschluss- oder Hubendstellung geschwenkt. In dieser Stellung wird der vorderste Clip gegen den Schlauchzopf gedrückt und ist zwischen diesem und dem ersten Verschließwerkzeug eingespannt. Zeitversetzt, d.h. noch während der untere Verschließhebel in dieser Stellung verharrt, bewegt sich das zweite (obere) Verschließwerkzeug auf das untere Verschließwerkzeug durch eine Schwenkung um dieselbe Schwenkachse zu.

Unmittelbar vor dem Verschließen des Clips wird dadurch zunächst mittels einer an den Verschließwerkzeugen vorgesehenen Schervorrichtung der vorderste Clip von dem nachfolgenden Clipstrang abgetrennt. In diesem Moment ist der vorderste Clip frei und wird nur noch durch die Spannung des Schlauchzopfs gegen das untere Verschließwerkzeug angedrückt. Sodann wird der Clip durch eine weitere Annäherung des oberen Verschließwerkzeugs an das untere Verschließwerkzeug verformt, bis sich die Verschließwerkzeuge bis auf die Klammerhöhe angenähert haben und der Clip um den Schlauchzopf herum verschlossen ist.

Wenn die Clipmaschine für eine Vielzahl von verschiedenen Wurstprodukten und Verpackungshüllen eingesetzt werden soll, kommen für den jeweiligen Bedarf angepasste, unterschiedliche Clips zum Einsatz, die sich sowohl in ihrer Festigkeit als auch in ihrer Größe, z.B. Schenkellänge und/oder Materialstärke, unterscheiden. Entsprechend muss der Verschlussabstand angepasst werden, da dieser für das Maß, auf dass das Verschlusselement beim Verschließen zusammengedrückt wird (im Folgenden Klammerhöhe genannt), maßgebend ist. Dazu wird bekanntermaßen die Ruhelage wenigstens eines der Verschließwerkzeuge und somit der Verschlussabstand verändert. Dazu dient vorzugsweise ein einstellbarer Anlenkpunkt am Gegenlager des Kniehebels für das zweite Verschließwerkzeug als Einstellmittel.

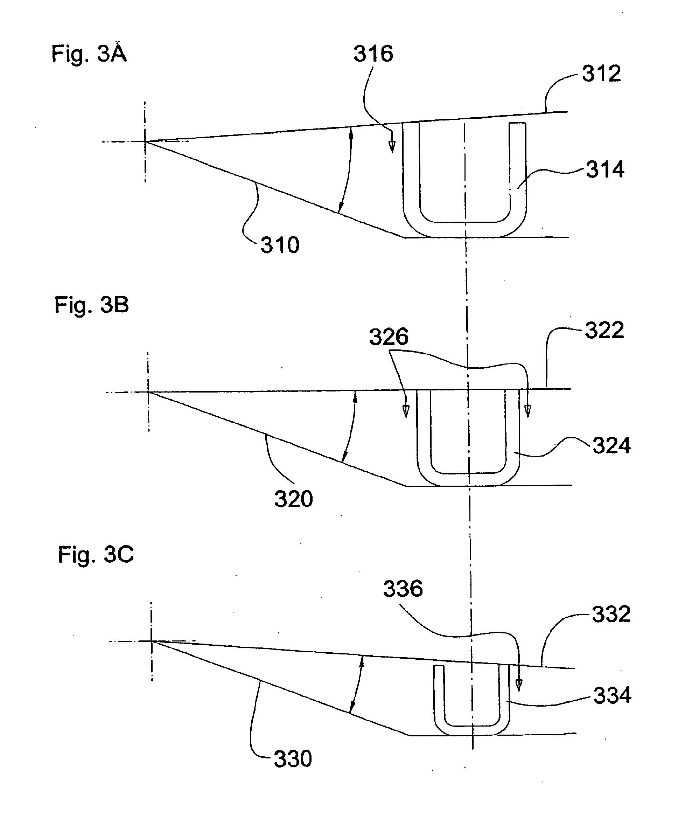

Werden Clips unterschiedlicher Größe verwendet und zu diesem Zweck die Verschlussstellung verstellt, so ändert sich der Öffnungswinkel der beiden relativ zueinander beweglichen Verschließhebel. Dies hat zur Folge, dass je nach Schenkellänge des unverformten Clips das obere Verschließwerkzeug nicht gleichzeitig an beiden Schenkeln angreift. Dies ist in Fig. 3 ist in stark vereinfachter Weise dargestellt. Darin ist die jeweils feste Winkelstellung des unteren nicht verstellbaren Verschließhebels durch eine Linie 310, 320 und 330 dargestellt. Die Winkelstellung des einstellbaren oberen Verschließhebels ist jeweils durch eine Linie 312, 322 und 332 repräsentiert. Zur Illustration wird die Stellung der Verschließwerkzeuge jeweils im Moment der ersten Berührung des zweiten Verschließwerkzeugs (Stempel) mit Clips dreier verschiedener Größen (stark überzeichnet) dargestellt.

In Fig. 3A ist zu erkennen, dass im Fall eines großen Clips 314 das zweite Verschließwerkzeug zuerst mit dem inneren, der Schwenkachse nahen Schenkel des Clips 314 in Berührung kommt. Beim Verschließen des Clips wird somit zunächst ein Drehmoment, dargestellt durch den Pfeil 316, auf den Clip 314 ausgeübt. Hierdurch wird eine Instabilität des Clips erzeugt, der ja bereits von den nachfolgenden Clipstrang abgetrennt war. Bei dem mittelgroßen Clip 324 im Beispiel der Fig. 3B kommen beide Schenkel gleichzeitig mit dem zweiten Verschließwerkzeug 323 in Berührung. Der Clip 324 wird beim Verschließen somit gleichmäßig belastet, siehe Pfeile 326, und beim Andrücken gegen das erste Verschließwerkzeug (Matrize) in seiner Lage stabilisiert. Ein kleiner Clip 334 wird gemäß Fig. 3C zunächst auf der Seite seines der Schwenkachse fernen Schenkels belastet und neigt aufgrund des resultierenden Drehmoments, dargestellt durch den Pfeil 336, ebenfalls zum Kippen.

Solche unkontrollierbaren Kipp- oder Drehmomente, die auf den abgetrennten Clip wirken und somit eine Fehlerquelle darstellen, gilt es zu vermeiden und den Verschließvorgang dadurch sicherer zu gestalten.

Die Aufgabe wird erfindungsgemäß bei einer Clipmaschine der eingangs genannten Art dadurch gelöst, dass das zweite Verschließwerkzeug entlang linearer Führungsmittel relativ zum ersten Verschließwerkzeug zum Verschließen von Clips und zum Einstellen der Ruhelage verfahrbar angeordnet ist.

Da erfindungsgemäß keine Einstellmittel für die Ruheposition des ersten Verschließwerkzeug vorgesehen sind, ist dessen Verschlussstellung durch den Umkehrpunkt der Verschließhebelbewegung festgelegt. Wird die Bewegung des zweiten Verschließwerkzeugs linear ausgeführt, vorzugsweise senkrecht auf eine gedachte Verbindungslinie der Schenkelenden eines in das erste Verschließwerkzeug (die Matrize) eingelegten Clips ausgerichtet, wird die geschilderte Fehlerquelle vermieden, da sich die Winkelstellung der Verschließwerkzeuge zueinander nach Beendigung der Schwenkbewegung des ersten Verschließwerkzeugs nicht mehr verändert. Dies wird dadurch begünstigt, dass die Antriebssteuerung vorsieht, das zweite Verschließwerkzeugs zeitversetzt zu dem ersten Verschlusswerkzeug in die Verschlussstellung zu fahren. Dabei kommt es allerdings nur darauf an, dass das erste Verschließwerkzeug die Verschlussstellung vor dem zweiten Verschlusswerkzeug erreicht, die Bewegung kann ansonsten zeitlich überlappend oder nacheinander ausgeführt werden.

Zwar sind beispielsweise aus der DE 101 31 807 Clipmaschinen einer anderen Gattung bekannt, die eine lineare Stempelführung aufweisen. Diesen Maschinen liegt jedoch ein vollkommen anderes kinematisches Konzept und eine andere Art der Clips und folglich auch der Clipzuführung zugrunde. Die in solchen Maschinen verwendeten Clips sind vereinzelt mit parallelen Klammerebenen nebeneinander aufgereiht und im Bereich ihres Rückens mittels eines Siegelstreifens zu Clipsträngen verbunden. Solche Clips werden einem ortsfesten Clipeintrittsfenster über eine Magazinstange zugeführt. Hinter dem Clipeintrittsfenster befindet sich die Führungsbahn des Stempels, der beim Ausführen der Verschlussbewegung den vordersten Clip von dem nachfolgenden Clipstrang ab trennt und - in der Stempelführung geführt - auf die ortsfeste Matrize zutreibt. Dieses kinematische Konzept, welches üblicherweise bei kleineren Maschinengattungen für den halbautomatischen Betrieb verwendet wird, ist jedoch jeweils nur für eine bestimmte Clipgröße ausgelegt. Das kinematische Konzept der gattungsgemäßen Clipmaschine ermöglicht hingegen den Einsatz verschiedener Clipgrößen.

Weitere Merkmale und Vorteile der erfindungsgemäßen Clipmaschine ergeben sich aus den Unteransprüchen. Diese werden unter Bezugnahme auf die beigefügten Figuren in der nachfolgenden Beschreibung eines Ausführungsbeispiels erläutert. Es zeigen:
- Fig. 1: eine schematische Darstellung des kinematischen Konzepts der erfindungsgemäßen Clipmaschine;
- Fig. 2: die Führung des zweiten Verschließwerkzeugs in einem perspektivischen Ausschnitt eines Ausführungsbeispiel der erfindungsgemäßen Clipmaschine; und
- Fig. 3: eine schematische Darstellung des Einflusses der Clipgröße auf die Prozesssicherheit beim Verschießen mit einer Clipmaschine nach dem Stand der Technik.

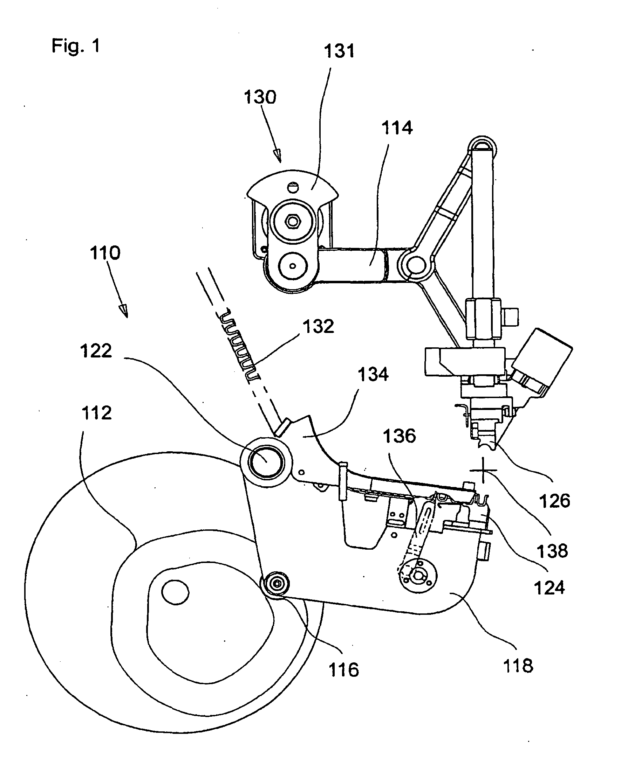

Das in Fig. 1 gezeigte Ausführungsbeispiel der Clipmaschine 100 weist einen ersten Antrieb 110 mit einer Kurvenscheibe 112 auf, von der mittels einer Kurvenrolle 116 die Bewegung für einen unteren Verschließhebel 118 abgenommen wird. Ferner weißt die Clipmaschine 100 einen zweiten Antrieb 130 mit einer Kurbel 131 auf, von der mittels eines Hebelarms 114 die Bewegung für ein zweites oberes Verschließwerkzeug 126 abgenommen wird.

Der Verschließhebel 118 ist an einer Schwenkachse 122 angelenkt. Er trägt an seinem der Schwenkachse 122 fernen Ende ein erstes Verschließwerkzeug 124, welches in dem gezeigten Ausführungsbeispiel eine Matrize ist.

Ein Clipstrang 132 wird dem Verschließhebel 118 von oben zugeführt und entlang einer in der Nähe der Schwenkachse 122 beginnenden Führungsbahn 134 an dem Cliphebel 118 in Richtung der Matrize 124 geführt. Als Antrieb für den Transport des Clipstrangs 132 ist am vorderen Ende des Cliphebels 118 ein intermittierend an dem Clipstrang angreifendes Fördermittel 136 angeordnet. Das Fördermittel 136 hebt den Clipstrang an seinem der Matrize 124 nahen Ende an, zieht ihn in Richtung der Matrize nach und legt dabei den vordersten Clip in die Matrize 124 ein.

Der Transport des Clipstrangs findet im Wesentlichen in der gezeigten Stellung des unteren Cliphebels 118 statt, wenn dieser sich in seiner Öffnungsstellung befindet. Nachdem oder noch während der vorderste Clip in die Matrize eingelegt wird, kehrt die Schwenkbewegung des unteren Cliphebels 118 um und dieser nährt sich der Verschlussstellung. Hierzu lenkt die Kurvenscheibensteuerung (bedingt durch die Kurve 112 und ggf. eine überlagerten Motorsteuerung) den Verschließhebel 118 nach oben, bis sich die Matrize 124 mit dem eingelegten Clip der als Kreuz 138 markierten Schlauchachse bis auf einen vorgegebenen Abstand annähert. In dieser Stellung wird der vorderste Clip gegen den Schlauchzopf gedrückt und durch dessen Vorspannung in die Matrize gedrückt.

Das erste und zweite Verschließwerkzeug 124, 126 weisen jeweils Schermittel auf, die während des Aufeinanderzubewegens in die Verschlussstellung als Schervorrichtung zum Abtrennen des vordersten Clips von dem Nachfolgenden Clipstrang 132 zusammenwirken, bevor dieser vorderste Clip um die Schlauchhülle verschlossen wird. Das Abtrennen erfolgt dabei erst, wenn der untere Verschließhebel 118 bereits seiner Verschlussstellung erreicht hat, damit der vorderste Clip durch den Schlauchzopf in der Matrize gehalten wird. Deshalb ist eine Antriebssteuerung vorgesehen, die das zweite Verschließwerkzeug, den Stempel 126, in Richtung der Schlauchachse 138 zeitlich versetzt erfolgen lässt.

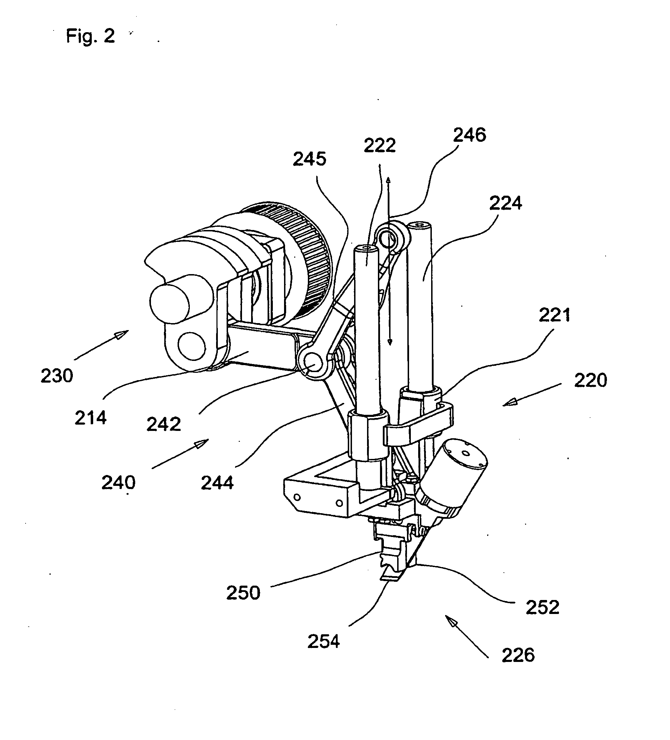

Dass obere Verschließwerkzeug 226 wird, wie nachfolgend unter Bezugnahme auf Fig. 2 erläutert, entlang linearer Führungsmittel 220 relativ zum ersten Verschließwerkzeug sowohl zum Verschließen von Clips zwischen der in Fig. 1 dargestellten Öffnungsstellung und der Verschlussstellung als auch zum Einstellen der Ruheposition verfahren.

Das zweite Verschließwerkzeug 226 ist an einer linearen Schlittenführung 221 angeordnet, welche mittels zweier Führungsschienen 222, 224 auf einer linearen Bahn zwangsgeführt ist und mit diesen die linearen Führungsmittel 220 bildet. Die Führungsmittel sind so ausgerichtet, dass das zweite Verschließwerkzeug 126 eine auf die Schlauchachse 138 ausgerichtete Bewegung ausführt, vgl. Fig. 1.

Die von dem Antrieb 230 über den Hebel 214 abgeleitete Bewegung wird über eine Kniehebelanordnung 240 in die Schlittenführung 220 eingeleitet. Dazu greift der Hebel 214 an dem Kniegelenk 242 der Kniehebelanordnung 240 an und streckt bzw. beugt diese. Die Kniehebelanordnung 240 weist einen ersten Hebel 244, dessen dem Kniegelenk 242 fernes Ende an der Schlittenführung 220 angelenk ist, und einen zweiten Hebel 245 auf, dessen dem Kniegelenk 242 fernes Ende an einem in Richtung der linearen Führungsmittel 220 verstellbaren Gegenlager (nicht gezeigt) angelenkt ist. Durch die Verstellung, gekennzeichnet durch einen Doppelpfeil 246, wird die Ruhelage des zweiten Verschließwerkzeugs 226 und somit insbesondere dessen Abstand von dem ersten Verschließwerkzeug 124 in der Verschlussstellung auf die jeweilige Cliphöhe eingestellt.

In der perspektivischen Darstellung der Fig. 2 ist ferner zu erkennen, dass das zweite Verschließwerkzeug 226 zwei Stempel 250, 252 aufweist, zwischen welchen ein Messer 254 angeordnet ist. Dieser Doppelstempelanordnung ist eine entsprechende Doppelmatrizenanordnung an dem Verschlusshebel zugeordnet. Mittels einer solchen Doppelclipanordnung können auf einen zuvor gebildeten Schlauchzopf gleichzeitig zwei Clips gesetzt und verschlossen werden. Der Schlauchzopf kann im Anschluss daran durch das Messer 254 durchtrennt und somit die Würste vereinzelt werden.

## Patentansprüche

1. Clipmaschine (100) mit einem Verschließhebel (118),
einem ersten Verschließwerkzeug (124), welches an dem Verschließhebel (118) angeordnet und mit diesem schwenkbar ist,
einem zweiten Verschließwerkzeug (126, 226), wobei das erste Verschließwerkzeug (124) und das zweite Verschließwerkzeug (126, 226) zum Verschließen von Clips relativ zueinander zwischen einer Öffnungsstellung und einer Verschlussstellung bewegbar sind,
mit einer Antriebssteuerung für die Verschließwerkzeuge, die so eingerichtet ist, dass zuerst das erste Verschließwerkzeug (124) und dann das zweite Verschließwerkzeug (126, 226) in die Verschlussstellung gefahren wird, und
mit Einstellmitteln, eingerichtet zum Einstellen der Ruhelage des zweiten Verschließwerkzeugs (126, 226) und somit des Abstands der Verschließwerkzeuge in ihrer Verschlussstellung,
wobei der Verschließhebel (118) eine Führungsbahn (134) für einen zugeführten Clipstrang aufweist, die in Annäherung an das erste Verschließwerkzeug (124) mündet, und
wobei die Verschließwerkzeuge (124, 126, 226) Schermittel aufweisen, die eingerichtet sind, zum Abtrennen eines vordersten Clips von einem nachfolgenden Clipstrang (132) unmittelbar vor dem Verschließen des abgetrennten Clips als Schervorrichtung zusammenzuwirken,
**dadurch gekennzeichnet, dass** das zweite Verschließwerkzeug (126, 226) entlang linearer Führungsmittel (220) relativ zum ersten Verschließwerkzeug (124) verfahrbar angeordnet ist.

2. Clipmaschine (100) nach Anspruch 1,
**gekennzeichnet durch** eine lineare Schlittenführung (221), an welcher das zweite Verschließwerkzeug (126, 226) angeordnet ist.

3. Clipmaschine (100) nach Anspruch 2,
**dadurch gekennzeichnet, dass** die lineare Schlittenführung (221) senkrecht auf eine Verbindungslinie der Schenkelenden eines in das erste Verschließwerkzeug (124) eingelegten Clips ausgerichtet ist.

4. Clipmaschine (100) nach einem der vorstehenden Ansprüche,
**dadurch gekennzeichnet, dass** das zweite Verschließwerkzeug (126, 226) mit einem Kurbelantrieb (130, 230) in Verbindung steht.

5. Clipmaschine (100) nach Anspruch 4,
**dadurch gekennzeichnet, dass** die Krafteinleitung von dem Kurbelantrieb (130, 230) über eine Kniehebelanordnung (240) erfolgt, deren erster Hebel (244) mit seinem dem gemeinsamen Kniegelenk (242) fernen Ende an der linearen Schlittenführung (221) und deren zweiter Hebel (246) mit seinem dem gemeinsamen Kniegelenk (242) fernen Ende an den als verstellbares Gegenlager ausgebildeten Einstellmitteln angelenkt ist.

## Claims

1. A clipping machine (100) comprising a closure lever (118),
a first closure tool (124) which is arranged on and pivotable with the closure lever (118),
a second closure tool (126, 226), wherein the first closure tool (124) and the second closure tool (126, 226) are movable relative to each other between an opening position and a closure position for closing clips,
a drive control for the closure tools, which is so adapted that firstly the first closure tool (124) and then the second closure tool (126, 226) is moved into the closure position, and
adjusting means adapted to adjust the rest position of the second closure tool (126, 226) and thus the spacing of the closure tools in their closure position,
wherein the closure lever (118) has a guide path (134) for a supplied clip line, which guide path opens in the proximity of the first closure tool (124), and
wherein the closure tools (124, 126, 226) have shearing means adapted to co-operate as a shearing arrangement for severing a foremost clip from a subsequent clip line (132) immediately prior to closure of the severed clip,
**characterised in that** the second closure tool (126, 226) is arranged displaceably along linear guide means (220) relative to the first closure tool (124).

2. A clipping machine (100) according to claim 1,
**characterised by** a linear carriage guide (221) on which the second closure tool (126, 226) is arranged.

3. A clipping machine (100) according to claim 2,
**characterised in that** the linear carriage guide (221) is oriented perpendicularly to a connecting line connecting the ends of the limbs of a clip inserted into the first closure tool (124).

4. A clipping machine (100) according to one of the preceding claims,
**characterised in that** the second closure tool (126, 226) is connected to a crank drive (130, 230).

5. A clipping machine (100) according to claim 4,
**characterised in that** the application of force by the crank drive (130, 230) is effected by way of a toggle lever arrangement (240) of which the first lever (244) is pivotably connected with its end remote from the common toggle joint (242) to the linear carriage guide (221) and the second lever (246) is pivotably connected with its end remote from the common toggle joint (242) to the adjusting means which are in the form of a displaceable counterpart support.

## Revendications

1. Agrafeuse (100) comprenant un levier de fermeture (118),
un premier outil de fermeture (124), qui est monté sur le levier de fermeture (118) et qui peut basculer avec celui-ci,
un second outil de fermeture (126, 226), le premier outil de fermeture (124) et le second outil de fermeture (126, 226) pouvant être déplacés pour la fermeture d'agrafes l'un par rapport à l'autre entre une position d'ouverture et une position de fermeture,
comprenant une commande d'entraînement pour les outils de fermeture, qui est telle que d'abord le premier outil de fermeture (124) et ensuite le second outil de fermeture (126, 226) viennent dans la position de fermeture et des moyens de réglage, aménagés pour l'ajustage de la position de repos du second outil de fermeture (126, 226) et donc de l'espacement des outils de fermeture dans leur position de fermeture,
le levier de fermeture (118) présentant une glissière de guidage (134) d'une file d'agrafes amenée, qui débouche à proximité du premier outil de fermeture (124) et
les outils de fermeture (124, 126, 226) présentant des moyens de cisaillement, qui sont aménagés pour coopérer pour la séparation d'une agrafe la plus avancée d'une file d'agrafes (132) consécutive juste après la fermeture de l'agrafe séparée comme dispositif de cisaillement,
**caractérisée en ce que** le second outil de fermeture (126, 226) est disposé dans de façon à pouvoir coulisser le long des moyens de guidage (220) linéaires par rapport au premier outil de fermeture (124).

2. Agrafeuse (100) selon la revendication 1,
**caractérisée par** un guidage à coulisseau (221) linéaire, sur lequel est monté le second outil de fermeture (126, 226).

3. Agrafeuse (100) selon la revendication 2,
**caractérisée en ce que** le guidage à coulisseau (221) linéaire est orienté perpendiculairement à une ligne de liaison des extrémités de branche d'une agrafe insérée dans le premier outil de fermeture (124).

4. Agrafeuse (100) selon l'une quelconque des revendications précédentes,
**caractérisée en ce que** le second outil de fermeture (126, 226) est en liaison avec un entraînement à manivelle (130, 230).

5. Agrafeuse (100) selon la revendication 4,
**caractérisée en ce que** l'application de force s'effectue par un entraînement à manivelle (130, 230) au moyen d'un agencement à levier coudé (240), dont le premier levier (244) est articulé par son extrémité éloignée de l'articulation coudée (242) commune au guidage à coulisseau linéaire (221) et dont le second levier (246) est articulé par son extrémité éloignée de l'articulation coudée (242) commune aux moyens de réglage constitués en butée réglable.
